# EUROPEAN PATENT SPECIFICATION

(11) **EP 3 647 172 B1**
(45) Date of publication and mention of the grant of the patent: **30.08.2023**
(21) Application number: 19206625.6
(22) Date of filing: 31.10.2019
(51) Int. Cl.: B62J 33/00, B62J 43/30, B62K 21/12

(54) **HEATABLE GRIP**
BEHEIZBARER GRIFF
POIGNÉE CHAUFFANTE

(30) Priority: 31.10.2018 GB 201817815
(43) Date of publication of application: 06.05.2020
(73) Proprietor: Halfords Limited, Redditch, Worcestershire B98 0DE (GB)
(72) Inventor: STEVENSON, Justin, Loughborough, Leicestershire LE12 9TQ (GB)
(74) Representative: HGF

(56) References cited:
- DE-A1-102009 051 940
- JP-A- 2015 048 069
- US-A1- 2005 103 769

## Description

### TECHNICAL FIELD

The invention relates to a heatable grip. The invention particularly, but not necessarily, relates to a heatable handlebar grip for use with a bicycle.

### BACKGROUND

Cycling in cold conditions can give riders uncomfortably cold hands. A rider's hands are often more exposed to the elements, for example wind and rain, than other parts of the body, so lose heat faster. Moreover, as hands are at the extreme of the body's circulatory system, hands begin to feel cold faster than other parts of the body, as overall body temperature falls. In particularly cold conditions, a rider may even experience numbness/loss of sensation in their hands. While gloves can provide protection from the elements, even well-insulated gloves cannot guarantee against cold hands or hand numbness due to cold conditions. Moreover, the wearing of particularly thick, insulated gloves can reduce manual dexterity, making operation of a bicycle's brakes and gears, for example, difficult for the rider. It is known to provide heatable handlebar grips to warm a rider's hands. Known arrangements include heatable grips that are powered by a battery pack mountable to a handlebar stem or a bicycle's frame and connected to the handlebar grips by watertight wires. However, such arrangements clutter the bicycle and the exposed battery pack and wires are susceptible to damage, particularly if the rider has the misfortune to crash or drops the bicycle.

US 2005/103769 A1 and DE 10 2009 051940 disclose examples of known heatable handlebar grips. JP 2015/048069 discloses a further example, in which a battery is received within a handlebar tube.

It is an object of embodiments of the invention to at least mitigate one or more problems associated with known arrangements.

### SUMMARY OF THE INVENTION

According to the invention which is defined in the appended claims, there is provided a heatable grip comprising: a first part having a sleeve and a heat generating element; and a second part having a battery or a battery housing, wherein the sleeve is receivable over a handlebar tube and the battery or the battery housing is receivable within the handlebar tube and an electrical connection is provided therebetween for supplying electrical power from the battery or the battery housing to the heat generating element, wherein the first and second parts are releasably securable to one another to provide the electrical connection; and characterised in that the second part comprises an enlarged end having an open end from which the battery or battery housing extends.

The invention may provide a heatable grip having no external, or loose, wires and that protects the battery by housing it, at least partially, within the handlebar tube or the like. As such, it follows that the invention may also provide a more compact and/or more durable heatable grip when compared with known arrangements.

In certain embodiments, the heat generating element may comprise at least one resistive wire disposed about the sleeve. The at least one resistive wire may be disposed helically about the sleeve. The first part may comprise an insulating layer disposed between the heat generating element and the sleeve to inhibit dissipation of heat from the heat generating element into the sleeve and, in use, into the handlebar tube. Additionally, or alternatively, the first part may comprise an outer layer disposed about the sleeve. The heat generating element may be at least partially embedded in the outer layer.

Optionally, the second part may comprise an enlarged end configured to engage with the sleeve to releasably secure the first and second parts to one another. The sleeve and the enlarged end may be configured to provide a bayonet-type connection to releasably secure the first and second parts to one another.

In certain embodiments, the first part may comprise a first electrical contact, the second part may comprise a second electrical contact and at least one of the first and second electrical contacts may be ring-like to provide the electrical contact between the first and second parts in any angular orientation of the first and second parts relative to one another.

The second part may comprise an electronics housing for containing a controller for controlling the heat generating element. Either of the first and second parts may comprise a button actuable by a user to provide an input. The heat generating element may be controlled in dependence of the input.

Either of the first and second parts may comprise a display to indicate a status of the heat generating element or the battery. The display may comprise one or more light-emitting diodes. The first part may comprise a fastener to retain the sleeve on the handlebar tube. The fastener may comprise a collet.

### BRIEF DESCRIPTION OF THE DRAWINGS

Embodiments of the invention will now be described, by way of example only, with reference to the accompanying figures, in which:
Figure 1 is a perspective view of a heatable handlebar grip according to an embodiment of the invention;
Figure 2 is an exploded perspective view of the heatable handlebar grip shown in Figure 1; and
Figure 3 is a further exploded perspective view of the heatable handlebar grip shown in Figures 1 and 2.

### DETAILED DESCRIPTION

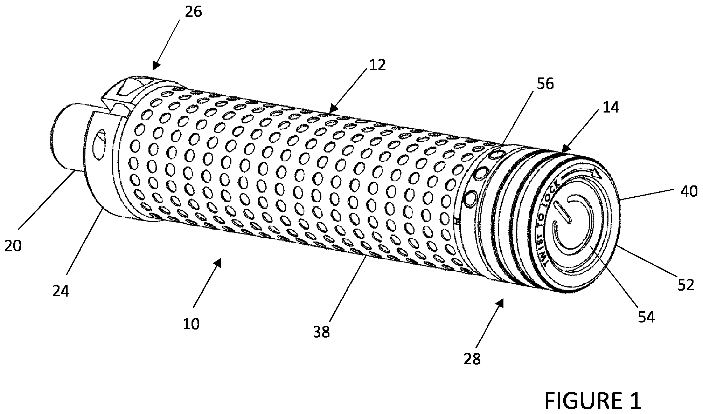

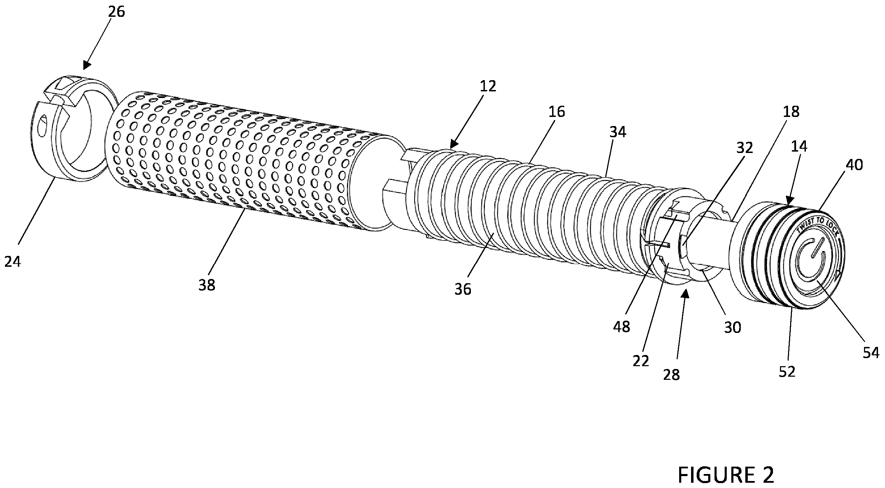

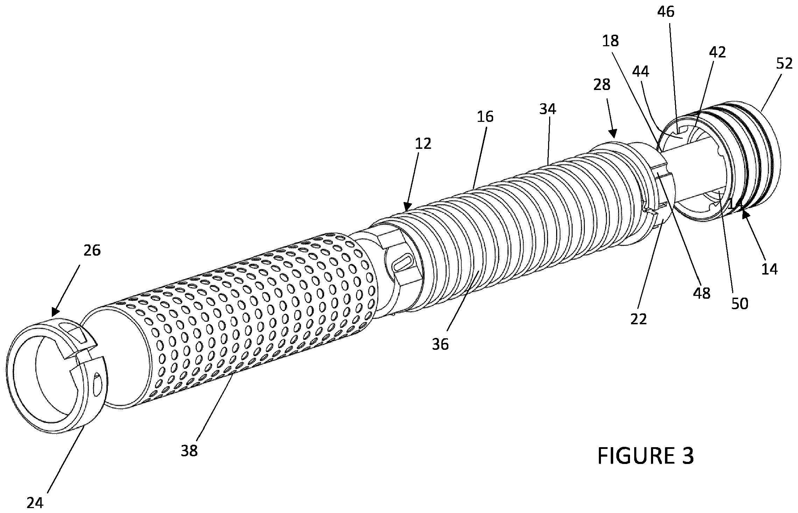

Referring to the accompanying figures, there is shown a heatable handlebar grip 10 according to an embodiment of the invention. The grip 10 is particularly suited for use with a bicycle. The grip 10 comprises a first part 12 and a second part 14. The first part 12 includes a heat generating element 16. The second part 14 includes a battery 18. The first and second parts 12, 14 are releasably securable to one another such that an electrical connection is provided therebetween. The electrical connection is for suppling electrical power from the battery 18 to the heat generating element 16. Moreover, the first and second parts 12, 14 are releasably securable to one another such that an annulus, i.e. a ring-like space, suitable to accommodate a portion of a handlebar tube 20, is delimited by a radially inner surface of the first part 12 and a radially outer surface of the second part 14. For the avoidance of doubt, Figure 1 shows the first and second parts 12, 14 fully received over and within the handlebar tube 20, respectively, and releasably secured to one another. Figures 2 and 3 each show an exploded view of the heatable handlebar grip 10 in which the first and second parts 12, 14 are not secured to one another.

In certain embodiments, the first part 12 comprises a sleeve 22 having an internal diameter that is substantially equal to an outer diameter of an end portion, i.e. a handle portion, of the handlebar tube 20. As such, the sleeve 22 is receivable over the end portion of the handlebar tube 20. A radially innermost surface of the sleeve 22 may provide the radially inner surface of the first part 12 that in part delimits the annulus. In certain embodiments, the internal diameter of the sleeve 22 may be such that the sleeve 22 forms a friction fit with the handlebar tube 20. As such, the friction fit may retain the first part 12 on the handlebar tube 20. Additionally, or alternatively, retention of the sleeve 22 on the handlebar tube 20 may be at least facilitated by a fastener 24. As shown in Figure 1, the fastener 24 may be provided at or near an inboard end 26 of the sleeve 22. As the skilled reader will appreciate, the inboard end 26 is an end of the sleeve 22 furthest from an end of the handlebar tube 20 over which the sleeve 22 is received and is opposite an outboard end 28 of the sleeve 22. The fastener 24 may comprise a collet, i.e. a segmented band, configured to grip the handle bar tube 20 upon tightening of a bolt, grub screw or the like extending through opposing ends of the collet. The collet may be coupled to the sleeve 22 or formed integrally with the sleeve 22. The outboard end 28 provides an opening 30 for allowing the battery 18 to be received within the handlebar tube 20. A first electrical contact 32 for facilitating the electrical connection between the first and second parts 12, 14 may be provided at or near the outboard end 28. The first electrical contact 32 is electrically connected to the heat generating element 16.

The heat generating element 16 may be disposed about the sleeve 22. The heat generating element 16 may comprise at least one resistive wire 34. The inherent resistive property of the resistive wire 34 converts electrical power, which is supplied by the battery 18, to heat. As shown in the accompanying figures, the at least one resistive wire 34 may be wrapped helically around the sleeve 20. However, the skilled reader will appreciate that the at least one resistive wire 34 may be disposed about the sleeve in any suitable manner, for example in parallel, spaced apart loops. Moreover, in certain embodiments, the heat generating element 16 may comprise a resistive film. While the heat generating element 16 may be disposed directly upon a radially outermost surface of the sleeve 22, the first part 12 may further comprise features disposed between the heat generating element 16 and the sleeve 22, for example an insulating layer 36. The insulating layer 36 may act to inhibit dissipation of heat generated by the heat generating element 16 radially inwardly into the sleeve 22 and thus into the handlebar tube 20. The insulating layer 36 may additionally, or alternatively, act to reflect heat generated by the heat generating element 16 radially outward.

The first part 12 may comprise an outer layer 38 disposed about the sleeve 22. The outer layer 38 extends along at least a portion of the first part 12 and is for the user to contact during use. The outer layer 38 may provide a radially outermost surface of the first part 12. The outer layer 38 may be formed of a resilient material, for example a natural or synthetic rubber material, which may improve the feel of the grip and/or inhibit a user losing their hold on the grip 10. The outer layer 38 may comprise a surface texture, for example dimples or ridges, which may additionally, or alternatively, improve the feel of the grip and/or inhibit a user losing their hold on the grip 10. The surface texture may facilitate heat dissipation from the outer layer 38 into a hand of the user holding the grip 10. As such, the outer layer 38 is thermally connected with the heat generating element 16 to allow heat generated by the heat generating element 16 to dissipate into the outer layer 38. In certain embodiments, the heat generating element 16 may be at least partially embedded within the outer layer 38, for example the heat generating element 16 may be overmoulded by the outer layer 38. Alternatively, the outer layer 36 may be wrapped about the sleeve 22. In certain embodiments, the heat generating element 16 may be at least partially embedded within the sleeve 22, which may negate the need for the outer layer 36.

As shown in the accompanying figures, the second part 14 may be substantially cylindrical. At least a portion of the battery 18 has an external diameter that is less than an internal diameter of the end portion of the handlebar tube 20, to enable the battery 18 to be at least partially received within the handlebar tube 20. A radially outer surface of the battery 18 may provide the radially outer surface of the second part 14 that in part delimits the annulus. The second part 14 may comprise an enlarged end 40, which may have a radially outermost surface greater than a radially outermost surface of the battery 18. The battery 18 may be bonded to the enlarged end 40. However, the battery 18 and the enlarged end 40 may be attachable to one another by any suitable means, for example cooperating threaded portions may be provided on the battery 18 and the enlarged end 40.

The enlarged end 40 may be configured to engage with the outboard end 28 to effect releasable securement of the first and second parts 12, 14 to one another.

According to the present invention, the enlarged end 40 comprises an open end 42 from which the battery 18 extends to delimit a recess 44. At least a portion of the outboard end 28 may be receivable in the recess 44. One or more protrusions 46 may extend radially inwardly into the recess 44 to be accommodated by one or more complementary grooves 48 in the outboard end 28 of the sleeve 22, when the first and second parts 12, 14 are each fully received over and within the handlebar tube, respectively. Each of the one or more grooves 48 may extend first axially from the outboard end 28, before continuing to extend circumferentially about the sleeve 22. Thus, once received within the handlebar tube 20, the second part 14 may be rotated, for example in the clockwise direction, to secure the first and second parts 12, 14 to one another. To release the first and second parts 12, 14 from one another, the rotation is reversed. As the skilled reader will appreciate, the above-described arrangement provides a bayonet-type connection. However, any suitable means of releasably securing the first and second parts 12, 14 to one another may be provided, for example cooperating threaded portions may be provided on the first and second parts 12, 14.

A second electrical contact 50 for facilitating the electrical connection between the first and second parts 12, 14 may be provided on or near the enlarged end 40. In the illustrated embodiment, the second electrical contact is provided in the recess 44. With the first and second parts 12, 14 fully received over and within the handlebar tube 20, respectively, the first and second electrical contacts 32, 50 contact one another to provide the electrical connection between the first and second parts 12, 14. At least one of the first and second electrical contacts 32, 50 may be ring-like in shape, to facilitate the electrical connection between the first and second parts 12, 14, regardless of the angular orientation of the first and second parts 12, 14 relative to one another. The second electrical contact 50 is electrically connected to the battery 18.

The heat generating element 16 may be controlled by a controller. As such, the second part 14 may comprise an electronics housing 52 for containing the controller. As shown in the illustrated embodiment, the electronics housing 52 may provide the enlarged end 40, i.e. the enlarged end 40 and the electronics housing 52 may be one and the same. In certain embodiments, the controller may control the heat generating element 16 remotely, for example via Bluetooth (RTM). As such, the controller may not be a feature of the grip 10. In certain embodiments, securing the first and second parts 12, 14 to one another may activate the heating element 16. In such embodiments, the controller is not necessarily required, though may be provided. Of course, releasing the first and second parts 12, 14 from one another will always deactivate the heating element 16, as this breaks the electrical connection between the heating element 16 and the battery 18.

The controller may be configured to control the heat generating element 16 in dependence on input provided a user. To this end, the second part 14 may comprise a button 54. The button 54 is to be understood to be any element manually actuable by the user to provide input and may include, for example, switches and toggles. The button 54 may be on an end of the second part 14. The second part 14 may comprise a display 56. The display 56 may be configured to provide a visual indication of a status of the heat generating element 16 and/or the battery 18, for example an indication of the temperature of the heat generating element 16. The display 56 may comprise one or more light-emitting diodes. By providing the button 54 and the display 56 on the second part 14, each or both of the button 54 and the display 56 may be incorporated in the electronics housing 52.

In use, with the first and second parts 12, 14 releasably secured to one another, the grip 10 may be activated by the user via the button 54. By way of example only, to activate the heat generating element 16, the user may press and hold the button 54 for a predetermined period, for example a period of two seconds. Subsequently, to deactivate the heat generating element 16 the user may again press and hold the button 54 for a predetermined period. With the heat generating element 16 activated, different modes of operation may be selected by the user. By way of example only, upon activation of the heat generating element 16 a "low heat" mode of operation may be effected, which may be indicated by illumination of a first light emitting diode of the display 56. Subsequently, the button 54 may be pressed for a predetermined period, for example a period of no more than one second, to select a "medium heat" mode of operation, which may be indicated by illumination of both the first light emitting diode and a second light emitting diode of the display 56. Subsequently, the button 54 may be pressed again for a predetermined period to select a "high heat" mode of operation, which may be indicated by illumination of each of the first and second light emitting diodes and a third light emitting diode of the display 56.

The invention is not restricted to the details of the illustrated embodiment. For example, while the sleeve 22 is shown in the accompanying figures to be substantially tubular, the skilled reader will appreciate that sleeve 22 may be any suitable shape. In certain embodiments, the sleeve 22 may be ergonomically shaped to complement the hand of the user. The sleeve 22 may be formed as a single piece or be of multi-part construction. The sleeve 22 may be formed of a moulded material, for example a moulded plastics material. The battery 18 may be a rechargeable battery, such as a lithium-ion rechargeable battery. As such, the second part 14 may comprise a charging port, for example a USB charging port. Moreover, in certain embodiments, the battery 18 may be alternatively provided as a battery housing. The battery housing may be configured to house one or more standard batteries, for example AA batteries. However, the battery housing may house one or more rechargeable batteries. The button 54 and/or the display 56 may be provided on the first part 12, for example at or near the inboard end 26. In certain embodiments, the second part 14 may be fully receivable within the handlebar tube 20. As the skilled reader will appreciate, the invention is not limited to use with a bicycle and may have other applications, for example the grip 10 may be suited for use with a motorcycle, a sledge, a snowmobile or walking poles, amongst other things.

The invention extends to any novel one, or any novel combination, of the features disclosed in this specification (including any accompanying claims and drawings) or to any novel one, or any novel combination, of the steps of any method or process so disclosed. The claims should not be construed to cover merely the foregoing embodiments, but also any embodiments falling within the scope of the claims. Each feature disclosed in this specification (including any accompanying claims and drawings), may be replaced by alternative features serving the same, equivalent or similar purpose, unless expressly stated otherwise. Thus, unless expressly stated otherwise, each feature disclosed is one example only of a generic series of equivalent or similar features.

## Claims

1. A heatable grip (10) comprising:
a first part (12) having a sleeve (22) and a heat generating element (16); and
a second part (14) having a battery (18) or a battery housing,
wherein the sleeve is receivable over a handlebar tube (20) and the battery or the battery housing is receivable within the handlebar tube and an electrical connection is provided therebetween for suppling electrical power from the battery or the battery housing to the heat generating element,
wherein the first and second parts (12, 14) are releasably securable to one another to provide the electrical connection; and
**characterised in that** the second part (14) comprises an enlarged end (40) having an open end (42) from which the battery (18) or battery housing extends.

2. A heatable grip (10) according to claim 1, wherein the heat generating element (16) comprises at least one resistive wire (34) disposed about the sleeve (22).

3. A heatable grip (10) according to claim 2, wherein the at least one resistive wire (34) is disposed helically about the sleeve (22).

4. A heatable grip (10) according to any preceding claim, wherein the first part (12) comprises an insulating layer (36) disposed between the heat generating element (16) and the sleeve (22) to inhibit dissipation of heat from the heat generating element into the sleeve.

5. A heatable grip (10) according to any preceding claim, wherein the first part (12) comprises an outer layer (38) disposed about the sleeve (22).

6. A heatable grip (10) according to claim 5, wherein the heat generating element (16) is at least partially embedded in the outer layer (38).

7. A heatable grip (10) according to any preceding claim, wherein the enlarged end (40) is configured to engage with the sleeve (22) to releasably secure the first and second parts (12, 14) to one another.

8. A heatable grip (10) according to claim 7, wherein the sleeve (22) and the enlarged end (40) are configured to provide a bayonet-type connection to releasably secure the first and second parts (12, 14) to one another.

9. A heatable grip (10) according to any preceding claim, wherein the first part (12) comprises a first electrical contact (32), the second part (14) comprises a second electrical contact (50) and at least one of the first and second electrical contacts is ring-like to provide the electrical contact between the first and second parts in any angular orientation of the first and second parts relative to one another.

10. A heatable grip (10) according to any preceding claim, wherein the second part (14) comprises an electronics housing (52) for containing a controller for controlling the heat generating element (16).

11. A heatable grip (10) according to any preceding claim, wherein either of the first and second parts (12, 14) comprise a button (54) actuable by a user to provide an input.

12. A heatable grip (10) according to claim 11, wherein heat generating element (16) is controlled in dependence of the input.

13. A heatable grip (10) according to any preceding claim, wherein either of the first and second parts (12, 14) comprise a display (56) to indicate a status of the heat generating element or the battery (18), the display optionally comprising one or more light-emitting diodes.

14. A heatable grip (10) according to any preceding claim, wherein the first part (12) comprises a fastener (24) to retain the sleeve (20) on the handlebar tube (20).

## Patentansprüche

1. Beheizbarer Griff (10), umfassend:
ein erstes Teil (12) mit einer Hülse (22) und einem wärmeerzeugenden Element (16); und
ein zweites Teil (14) mit einer Batterie (18) oder einem Batteriegehäuse,
wobei die Hülse über ein Lenkerrohr (20) aufnehmbar ist und die Batterie oder das Batteriegehäuse innerhalb des Lenkerrohrs aufnehmbar ist und eine elektrische Verbindung dazwischen bereitgestellt wird, um elektrische Energie von der Batterie oder dem Batteriegehäuse zu dem wärmeerzeugenden Element zu liefern,
wobei das erste und das zweite Teil (12, 14) aneinander lösbar feststellbar sind, um die elektrische Verbindung bereitzustellen, und
**dadurch gekennzeichnet, dass** das zweite Teil (14) ein vergrößertes Ende (40) mit einem offenen Ende (42) umfasst, von dem aus sich die Batterie (18) oder das Batteriegehäuse erstreckt.

2. Beheizbarer Griff (10) nach Anspruch 1, wobei das wärmeerzeugende Element (16) mindestens einen Widerstandsdraht (34) umfasst, der um die Hülse (22) herum angeordnet ist.

3. Beheizbarer Griff (10) nach Anspruch 2, wobei der mindestens eine Widerstandsdraht (34) spiralförmig um die Hülse (22) herum angeordnet ist.

4. Beheizbarer Griff (10) nach einem der vorhergehenden Ansprüche, wobei das erste Teil (12) eine Isolierschicht (36) umfasst, die zwischen dem wärmeerzeugenden Element (16) und der Hülse (22) angeordnet ist, um eine Wärmeableitung von dem wärmeerzeugenden Element in die Hülse zu verhindern.

5. Beheizbarer Griff (10) nach einem der vorhergehenden Ansprüche, wobei das erste Teil (12) eine äußere Schicht (38) umfasst, die um die Hülse (22) herum angeordnet ist.

6. Beheizbarer Griff (10) nach Anspruch 5, wobei das wärmeerzeugende Element (16) mindestens teilweise in die äußere Schicht (38) eingebettet ist.

7. Beheizbarer Griff (10) nach einem der vorhergehenden Ansprüche, wobei das vergrößerte Ende (40) konfiguriert ist, um in die Hülse (22) einzugreifen, um das erste und zweite Teil (12, 14) aneinander lösbar zu befestigen.

8. Beheizbarer Griff (10) nach Anspruch 7, wobei die Hülse (22) und das vergrößerte Ende (40) konfiguriert sind, um eine bajonettartige Verbindung bereitzustellen, um das erste und das zweite Teil (12, 14) aneinander lösbar zu befestigen.

9. Beheizbarer Griff (10) nach einem der vorhergehenden Ansprüche, wobei das erste Teil (12) einen ersten elektrischen Kontakt (32) umfasst, das zweite Teil (14) einen zweiten elektrischen Kontakt (50) umfasst und mindestens entweder der erste oder zweite elektrische Kontakt ringförmig ist, um den elektrischen Kontakt zwischen dem ersten und zweiten Teil in jeder Winkelausrichtung des ersten und zweiten Teils relativ zueinander bereitzustellen.

10. Beheizbarer Griff (10) nach einem der vorhergehenden Ansprüche, wobei das zweite Teil (14) ein Elektronikgehäuse (52) zur Aufnahme einer Steuerung zum Steuern des wärmeerzeugenden Elements (16) umfasst.

11. Beheizbarer Griff (10) nach einem der vorhergehenden Ansprüche, wobei irgendeines des ersten oder zweiten Teils (12, 14) einen von einem Benutzer betätigbaren Knopf (54) umfasst, um eine Eingabe bereitzustellen.

12. Beheizbarer Griff (10) nach Anspruch 11, wobei das wärmeerzeugende Element (16) in Abhängigkeit von der Eingabe gesteuert wird.

13. Beheizbarer Griff (10) nach einem der vorhergehenden Ansprüche, wobei irgendeines des ersten oder zweiten Teils (12, 14) eine Anzeige (56) umfasst, um einen Status des wärmeerzeugenden Elements oder der Batterie (18) anzuzeigen, wobei die Anzeige wahlweise eine oder mehrere Leuchtdioden umfasst.

14. Beheizbarer Griff (10) nach einem der vorhergehenden Ansprüche, wobei das erste Teil (12) einen Feststeller (24) umfasst, um die Hülse (20) auf dem Lenkerrohr (20) zu halten.

## Revendications

1. Poignée chauffante (10) comprenant :
une première partie (12) comportant un manchon (22) et un élément de génération de chaleur (16) ; et
une seconde partie (14) comportant une batterie (18) ou un boîtier de batterie,
dans lequel le manchon peut être reçu sur un tube de guidon (20) et la batterie ou le boîtier de batterie peut être reçu à l'intérieur du tube de guidon et une connexion électrique est prévue entre eux pour fournir de l'énergie électrique depuis la batterie ou le boîtier de batterie à l'élément de génération de chaleur,
dans laquelle les première et seconde parties (12, 14) peuvent être fixées l'une à l'autre de manière amovible pour fournir la connexion électrique ; et
**caractérisé en ce que** la seconde partie (14) comprend une extrémité élargie (40) comportant une extrémité ouverte (42) à partir de laquelle s'étend la batterie (18) ou le boîtier de batterie.

2. Poignée chauffante (10) selon la revendication 1, dans laquelle l'élément de génération de chaleur (16) comprend au moins un fil résistif (34) disposé autour du manchon (22).

3. Poignée chauffante (10) selon la revendication 2, dans laquelle l'au moins un fil résistif (34) est disposé de manière hélicoïdale autour du manchon (22).

4. Poignée chauffante (10) selon l'une quelconque des revendications précédentes, dans laquelle la première partie (12) comprend une couche isolante (36) disposée entre l'élément de génération de chaleur (16) et le manchon (22) pour empêcher la dissipation de la chaleur provenant de l'élément de génération de chaleur dans le manchon.

5. Poignée chauffante (10) selon l'une quelconque des revendications précédentes, dans laquelle la première partie (12) comprend une couche extérieure (38) disposée autour du manchon (22).

6. Poignée chauffante (10) selon la revendication 5, dans laquelle l'élément de génération de chaleur (16) est au moins partiellement noyé dans la couche extérieure (38).

7. Poignée chauffante (10) selon l'une quelconque des revendications précédentes, dans laquelle l'extrémité élargie (40) est configurée pour venir en prise avec le manchon (22) pour fixer de manière amovible les première et seconde parties (12, 14) l'une à l'autre.

8. Poignée chauffante (10) selon la revendication 7, dans laquelle le manchon (22) et l'extrémité élargie (40) sont configurés pour fournir une connexion de type baïonnette pour fixer de manière amovible les première et seconde parties (12, 14) l'une à l'autre.

9. Poignée chauffante (10) selon l'une quelconque des revendications précédentes, dans laquelle la première partie (12) comprend un premier contact électrique (32), la seconde partie (14) comprend un second contact électrique (50) et au moins l'un des premier et seconds contacts électriques est annulaire pour fournir le contact électrique entre les première et seconde parties dans n'importe quelle orientation angulaire des première et seconde parties l'une par rapport à l'autre.

10. Poignée chauffante (10) selon l'une quelconque des revendications précédentes, dans laquelle la seconde partie (14) comprend un boîtier électronique (52) pour contenir un contrôleur pour commander l'élément de génération de chaleur (16).

11. Poignée chauffante (10) selon l'une quelconque des revendications précédentes, dans laquelle l'une ou l'autre des première et seconde parties (12, 14) comprend un bouton (54) actionnable par un utilisateur pour fournir une entrée.

12. Poignée chauffante (10) selon la revendication 11, dans laquelle l'élément de génération de chaleur (16) est commandé en fonction de l'entrée.

13. Poignée chauffante (10) selon l'une quelconque des revendications précédentes, dans laquelle l'une ou l'autre des première et seconde parties (12, 14) comprend un affichage (56) pour indiquer un état de l'élément de génération de chaleur ou de la batterie (18), l'affichage comprenant facultativement une ou plusieurs diodes électroluminescentes.

14. Poignée chauffante (10) selon l'une quelconque des revendications précédentes, dans laquelle la première partie (12) comprend une attache (24) pour retenir le manchon (20) sur le tube de guidon (20).
